# EUROPEAN PATENT APPLICATION

(11) **EP 4 195 881 A1**
(43) Date of publication of application: **14.06.2023**
(21) Application number: 21213847.3
(22) Date of filing: 10.12.2021
(51) Int. Cl.: H05B 45/50, H05B 47/105, H05B 47/20, H05B 45/3578, H05B 47/26

(54) **ELECTRONIC SAFETY SWITCH FOR LED TUBE**

(71) Applicant: Silicon Hill B.V., 1098 XG Amsterdam (NL)
(72) Inventor: ROY, Shounak, Maarssenbroek (NL)
(74) Representative: Hoyng Rokh Monegier B.V.

(57) **Abstract**

LED lamp assembly comprising a safety switch, comprising a plurality of connector pins arranged at first and second ends of the LED lamp assembly, a plurality of rectifier circuits, one or more LEDs coupled to receive electrical power from the rectifier circuits, a safety switch control circuit operatively coupled to the safety switch, and a filter circuit comprising first and second filter elements. The safety switch comprises a first switch element coupled in series with the first filter element and a second switch element coupled in series with the second filter element, the safety switch coupled for supplying electrical power to a first one of the rectifier circuits. The safety switch control circuit is arranged to close the safety switch when the safety switch control circuit detects electrical power at the connector pins arranged at both the first and second ends of the LED lamp assembly.

## Description

### TECHNICAL FIELD

The present invention relates to a safety endcap assembly for use in a light emitting diode (LED) lamp arrangement, which is arranged to replace a fluorescent lamp in a luminaire.

### BACKGROUND

Fluorescent lamps are widely used in a variety of locations, such as schools and office buildings. Although conventional fluorescent lamps have certain advantages, they also pose certain disadvantages, including disposal problems due to the presence of toxic materials within the tube. LED-based lamps, or LED tubes, which can be used as one-for-one replacements for fluorescent tube lamps. Such LED-based replacement lamps typically include an elongate housing, with LEDs mounted inside the housing. An endcap is arranged at each longitudinal end of the housing for connecting the LED circuit board to the luminaire.

One problem when installing an LED tube into a lamp fixture designed for a fluorescent tube lamp or an LED tube lamp, is the potential hazardous contact with the exposed connector pins of the LED tube during installation. Unlike a fluorescent tube, an LED tube will typically have a current path formed by its internal circuitry between the connector pins on opposite ends of the LED tube. Accordingly, if the lamp fixture is energized when one end of the LED tube is plugged into the fixture and the person installing the LED tube touches the connectors at the other end of the LED tube, the person may experience an electrical shock.

Various types of mechanical safety switches have been proposed, usually implemented in the endcaps of an LED tube. However, these often rely on spring elements and moving parts which may fail and are difficult to use in some lamp fixtures which offer restricted access to a safety switch on an endcap once the LED tube has been installed.

### SUMMARY OF THE INVENTION

It is an object of the invention to address one or more of the above problems. In a first aspect, the invention concerns an LED lamp assembly comprising a safety switch. The LED lamp assembly comprises a plurality of connector pins arranged at first and second ends of the LED lamp assembly, the connector pins being adapted for electrical connection to a lamp fixture, a plurality of rectifier circuits coupled to receive electrical power from the connector pins, one or more LEDs coupled to receive electrical power from the rectifier circuits, a safety switch control circuit operatively coupled to the safety switch, and a filter circuit comprising a first filter element and a second filter element. The safety switch comprises a first switch element coupled in series with the first filter element and a second switch element coupled in series with the second filter element, the safety switch coupled for supplying electrical power to a first one of the rectifier circuits. The safety switch control circuit is arranged to close the safety switch (e.g. by closing the first and second safety switch elements so that they can conduct electrical current) when the safety switch control circuit detects electrical power at one or more of the connector pins arranged at the first end of the LED lamp assembly and at one or more of the connector pins arranged at the second end of the LED lamp assembly.

The LED lamp assembly has a safety switch at only one end, so that the connector pins arranged at the second end of the LED lamp assembly are electrically coupled to an input of a second one of the rectifier circuits not via a safety switch. This avoids more complex configurations with two or more safety switches which are more expensive to produce. The safety switch preferably comprises an electro-mechanical relay, or the safety switch may comprise one or more semiconductor switch elements such as one or more transistors or MOSFETs or the like. By implementing the safety switch using semiconductor switch elements, the lifetime of the LED lamp assembly can be extended, and the audible noise during operation can be reduced.

The safety switch control circuit is configured to close the safety switch when it detects electric power applied between the two ends of the LED lamp assembly, e.g. only when both ends of the LED lamp assembly receive electrical power from the lamp fixture. This occurs when both ends are installed into the lamp fixture and receive electrical power, thus reducing the risk of electric shock from exposed connector pins during installation of the LED lamp assembly into a lamp fixture. When the safety switch is open, in a preferred embodiment, electrical current is prevented from flowing from the connector pins arranged at the first end of the LED lamp assembly to the connector pins arranged at the second end of the LED lamp assembly via the rectifier circuits.

The safety switch control circuit is preferably configured to close the safety switch when the detected electrical power has a frequency above a predetermined threshold. Thus, the safety switch control circuit is preferably arranged to close the safety switch only when the safety switch control circuit detects electrical power having a frequency above a predetermined threshold at the connector pins. The predetermined threshold may be set at a level (e.g. 10kHz) to discriminate between electrical power received from a magnetic ballast or directly from a mains power supply, and electrical power received from an electronic ballast. When installed in a lamp fixture fitted with a magnetic ballast or without a ballast (so that the connectors pins receive electrical power at a low frequency, such as 50 or 60Hz), the safety switch control circuit may be arranged to not close the safety switch, which remains in the open position, so that no electrical current flows from one end to the other end of the LED lamp assembly via the circuit for supplying power to the LEDs.

This provides further protection of electric shock from exposed connector pins during installation of the LED lamp assembly into a lamp fixture fitted with a magnetic ballast or not fitted with a ballast. When installed in a lamp fixture fitted with an electronic ballast, the safety switch control circuit is configured to close the safety switch when it detects electric power applied between the two ends of the LED lamp assembly, i.e. only when both ends of the LED lamp assembly are installed into the lamp fixture, thus reducing the risk of electric shock from exposed connector pins during installation of the LED lamp assembly into a lamp fixture fitted with an electronic ballast.

The safety switch control circuit may be configured to provide a predetermined delay between the time of detecting electrical power at a frequency above the predetermined threshold at the connector pins and the time of closing the safety switch. The safety switch control circuit may include a time delay circuit to implement this delay. This delay (e.g. a delay in the range of 1 to 100ms) simulates the operation of a fluorescent tube, providing improved compatibility with electronic ballasts that may trigger a safety shutdown function in the absence of a delay. The delay also stabilizes the operation of the safety switch control circuit and helps to prevent erratic switching of the safety switch caused by variations in the output waveform of some types of electronic ballast.

The LED lamp assembly in one embodiment may be arranged so that a first one of the connector pins arranged at the first end of the LED lamp assembly is electrically coupled to a first input of a first one of the one or more rectifier circuits via the first switch element connected in series with the first filter element, and wherein a second one of the connector pins arranged at the first end of the LED lamp assembly is electrically coupled to a second input of a first one of the rectifier circuits via the second switch element connected in series with the second filter element.

The LED lamp assembly may comprise a first rectifier circuit arranged for receiving electrical power from the connector pins arranged at the first end of the LED lamp assembly, and a second rectifier circuit arranged for receiving electrical power from the connector pins arranged at the second end of the LED lamp assembly, wherein the LEDs are electrically coupled to an output of the first rectifier circuit and the second rectifier circuit.

The LED lamp assembly may further comprise a plurality of filament simulation circuits, wherein at least one of the connector pins at each of the first and second ends of the LED lamp assembly is coupled to a corresponding one of the filament simulation circuits.

The filter circuit in one embodiment comprises a high pass filter. The high pass filter may be configured to permit electric current above a certain frequency to pass through the filter, while electric current below a predetermined cut-off frequency does not pass through the filter circuit or is substantially attenuated to below a certain value. The predetermined cut-off frequency may be set at a level (e.g. 10kHz) to discriminate between electrical power received from a magnetic ballast or directly from a mains power supply, and electrical power received from an electronic ballast. This arrangement can provide increased isolation between the two ends of the LED lamp assembly when being installed in a lamp fixture having a magnetic ballast or no ballast.

The safety switch control circuit may have a first input electrically coupled to the connector pins at the first end of the LED lamp assembly and a second input electrically coupled to the connector pins at the second end of the LED lamp assembly, to receive electrical power as an input signal from both the first and second ends of the LED lamp assembly. This arrangement enables the safety switch control circuit to operate when receiving power and/or an input signal from either or both ends of the LED lamp assembly.

When the safety switch is closed, electrical current can flow from one end to the other end of the LED lamp assembly, i.e. between the connector pins at opposite ends of the LED lamp assembly. When safety switch is open, electrical current cannot flow from one end to the other end of the LED lamp assembly via the circuit for supplying power to the LEDs, i.e. via the rectifier circuits. The safety switch is preferably a normally open switch, i.e. it assumes an open position when it is not energized.

The safety switch control circuit may be constructed to have an impedance between the first and second inputs of 10kOhm or more at a frequency of 10kHz. This limits the amount of electrical current flowing through the safety switch control circuit to a minimal amount when the safety switch is open. The LED lamp assembly preferably conducts an electrical current equal to less than 0.7mA peak between the connector pins arranged at the first end of the LED lamp assembly and the connector pins arranged at the second end of the LED lamp assembly, when a voltage of 500V is applied between the first and second ends of the LED lamp assembly and the safety switch is open.

The LED lamp assembly is preferably able to withstand at least 1500V across the connector pins arranged at the first end of the LED lamp assembly and the connector pins arranged at the second end of the LED lamp assembly when the safety switch is open, providing a high level of protection against electric shock

The safety switch control circuit may comprise a first high pass filter electrically coupled one of the connector pins arranged at a first end of the LED lamp assembly, and a second high pass filter electrically coupled one of the connector pins arranged at a second end of the LED lamp assembly, and a logic circuit having a first input electrically coupled to the first high pass filter and a second input electrically coupled to the second high pass filter, and adapted to determine an output for control of the safety switch on the basis of the first input and/or the second input. The safety switch control circuit may be configured with the first input of the logic circuit electrically coupled to the first high pass filter via a third rectifier circuit, and the second input of the logic circuit electrically coupled to the second high pass filter via a fourth circuit rectifier circuit.

The LED lamp assembly may be adapted to provide electrical power to the LEDs via the connector pins arranged at the second end of the LED lamp assembly. In this way, the LED lamp assembly can be operated in a conventional lamp fixture fitted with a magnetic ballast or no ballast.

The LED lamp assembly may further comprise a switched-mode power supply, wherein the LED lamp assembly is adapted to provide electrical power to the LEDs via the switched-mode power supply when the safety switch control circuit detects electrical power having a frequency at or below the predetermined threshold at the connector pins arranged at the first end of the LED lamp assembly or at the connector pins arranged at the second end of the LED lamp assembly.

The LED lamp assembly may be adapted to disable or disconnect the switched-mode power supply from supplying electrical power to the LEDs when the safety switch control circuit detects electrical power having a frequency above the predetermined threshold at the connector pins arranged at the first end of the LED lamp assembly or at the connector pins arranged at the second end of the LED lamp assembly.

The LED lamp assembly may be adapted for operation in a lamp fixture fitted with a magnetic ballast or an electronic ballast or no ballast, thus providing greater flexibility in usage of the LED lamp assembly. The LED lamp assembly may be adapted to provide electrical power to the LEDs via the connector pins arranged at the second end of the LED lamp assembly and not from the connector pins arranged at the first end of the LED lamp assembly when the LED lamp assembly is operated in a lamp fixture fitted with a magnetic ballast or no ballast.

The LED lamp assembly may comprise a first filament simulation circuit having a first impedance and electrically coupled to at least one of the connector pins at the first end of the LED lamp assembly, and a second filament simulation circuit having a second impedance and electrically coupled to at least one of the connector pins at the second end of the LED lamp assembly, wherein the second impedance is higher than the first impedance when electrical power having a frequency lower than 1 kHz is applied to the connector pins.

The LED lamp assembly may comprise a first rectifier circuit forming a half-wave rectifier and electrically coupled to the connector pins at the first end of the LED lamp assembly, and a second rectifier circuit forming a full-wave rectifier and electrically coupled to the connector pins at the second end of the LED lamp assembly.

### BRIEF DESCRIPTION OF THE DRAWINGS

The advantages of the invention will be apparent upon consideration of the following detailed disclosure of exemplary non-limiting embodiments of the invention, especially when taken in conjunction with the accompanying drawings wherein:
FIG. 1 shows an example of an LED lamp assembly;
FIG. 2 illustrates an example of installing an LED lamp assembly into a lamp fixture;
FIG. 3 is a simplified block diagram of an embodiment of an LED lamp assembly including a safety switch;
FIG. 4 is a simplified block diagram showing further details of the LED lamp assembly of FIG. 3;
FIG. 5 is a simplified circuit diagram of one embodiment of a safety switch control circuit for an LED lamp assembly with a safety switch;
FIG. 6 is a simplified block diagram of an embodiment of the LED lamp assembly adapted for operation in lamp fixtures fitted with a magnetic ballast, an electronic ballast, or not fitted with a ballast;
FIG. 7 is a simplified circuit diagram of an LED lamp assembly installed in a lamp fixture fitted with a magnetic ballast;
FIG. 8 is a simplified circuit diagram of an LED lamp assembly installed in a lamp fixture fitted with an electronic ballast; and
FIG. 9 is a simplified circuit diagram of an LED lamp assembly installed in a lamp fixture that is not fitted with any ballast.

### DETAILED DESCRIPTION OF PREFERRED EMBODIMENTS

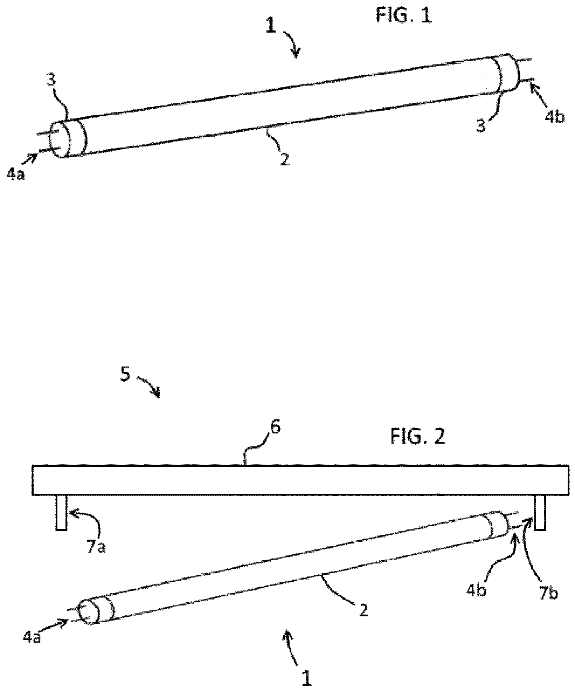

FIG. 1 shows an embodiment of an LED lamp assembly 1. The LED lamp assembly 1 comprises a translucent or transparent elongate housing 2, having one or more LEDs arranged in the housing 2. An endcap assembly 3 is typically provided at each end of the housing 2, and connector pins 4a, 4b extend from the endcap assemblies. Although the LED lamp assembly 1 in this embodiment is in the form of an elongated tube, other shapes are also possible.

The connector pins 4a, 4b are externally exposed for connecting the LED lamp assembly 1 mechanically and electrically to a lamp fixture. The lamp fixture may be designed, for example, to receive standard-sized fluorescent tubes, such as T5, T8, T10, or T12 tubes. The LED lamp assembly 1 typically includes two connector pins 4a, 4b at each end of the housing 2, but other numbers of connector pins may be used in various arrangements to accommodate different designs of the LED lamp and the lamp fixture.

FIG. 2 illustrates an example of installing the LED lamp assembly 1 into a lamp fixture 5. The installation process typically involves inserting one end of the LED lamp assembly 1 into the body 6 of the lamp fixture 5, so that the connector pins 4a, 4b at one end of the LED lamp assembly connect mechanically and electrically with corresponding fixture connectors 7a, 7b of the lamp fixture. In the situation shown, the connector pins 4b at the end being inserted will connect to fixture connectors 7b. However, it is possible that the lamp fixture is energized with electrical power during the installation process, so that an electrical voltage is present on the fixture connectors 7b.

The LED lamp assembly 1 typically includes an internal circuit for powering the LEDs in the lamp, and this internal circuit typically provides a path for electrical current to flow from one end of the LED lamp assembly 1 to the other end. In this situation, there is a danger that an electrical voltage will also be present on exposed connector pins 4a at the uninstalled end of LED lamp assembly 1, and create a risk of electrocution if the person installing the lamp accidentally comes into contact with the exposed connector pins 4a. Note that this situation can occur regardless of which end of the LED lamp assembly 1 is installed first into the lamp fixture, so that the uninstalled end can represent an electrical hazard.

In view of this problem, the LED lamp assembly 1 includes a safety switch 30 to provide a degree of electrical isolation between the connector pins 4a at one end and the connector pins 4b at the other end of the LED lamp assembly 1.

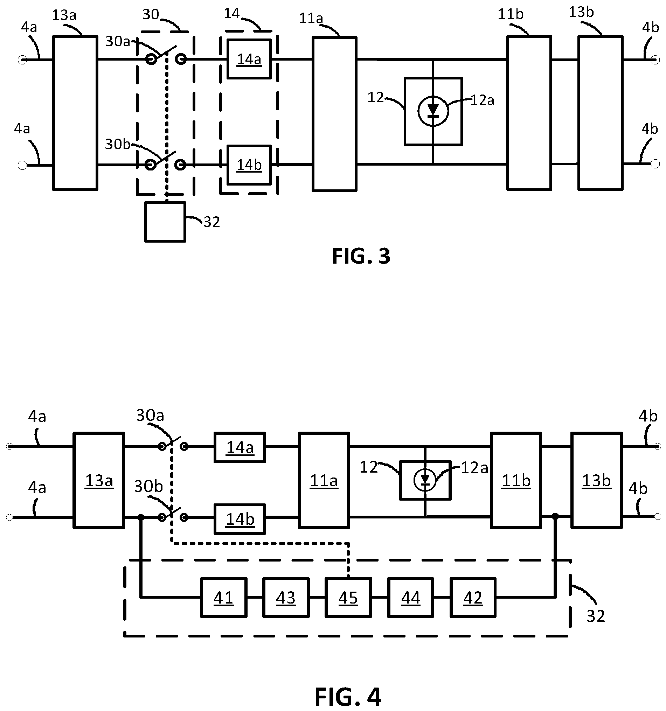

FIG. 3 shows a simplified block diagram of an embodiment of a LED lamp assembly 1 including a safety switch 30. For clarity of presentation, the diagram omits many components that may be necessary for operation of the lamp but are not relevant for the present explanation.

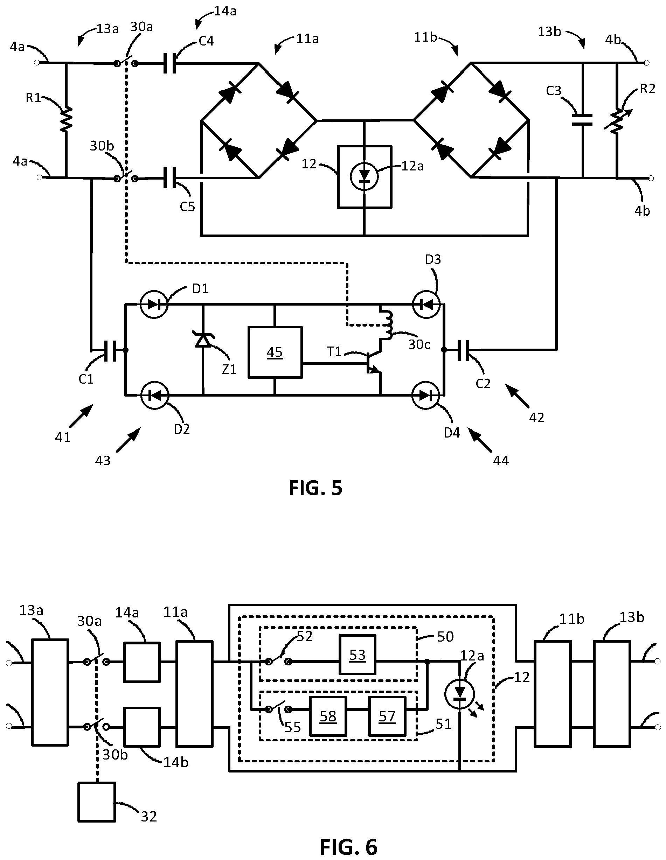

In this example, the LED lamp assembly 1 is double ended, and includes at each end two connector pins 4a, 4b adapted for electrical connection to lamp fixture 5. The connector pins may also provide mechanical connection to the lamp fixture, and/or other connector pins or connection members may be provided for additional or alternative electrical and/or mechanical connection. The connector pins 4a, 4b at each end of the LED lamp assembly are electrically coupled to a corresponding rectifier circuit 11a, 11b, which may comprise a half-wave or full-wave rectifier in various embodiments. The output of rectifier circuits 11a, 11b is a rectified voltage which may provide electrical power to LED circuit 12 to generate light. LED circuit 12 may consist or one or more LEDs 12a connected across the outputs of the rectifier circuits 11a, 11b, or may include additional circuits (e.g. as shown in FIG. 6) which are connected to the outputs of the rectifier circuits 11a, 11b and provide electrical power to one or more LEDs 12a.

Circuits 13a, 13b may also be included, connected to the two connector pins 4a, 4b, at each end of the LED lamp assembly. The circuits 13a, 13b may be used to simulate the heating filament present in a conventional fluorescent tube, as described further below.

In this embodiment, two connector pins 4a arranged at one end of the LED lamp assembly 1 (referred to herein as the first end) are electrically coupled via safety switch 30 to a first one of the rectifier circuits 11a. In this embodiment, the safety switch 30 has two safety switch elements 30a and 30b. One of the connector pins 4a is electrically coupled via one of the safety switch elements 30a to a first input of the first rectifier circuit 11a, and the other connector pin 4a is electrically coupled via the other safety switch element 30b to a second input of the first rectifier circuit 11a. A safety switch control circuit 32 is operatively coupled to the safety switch 30 to control the operation of the safety switch.

As shown in FIG. 3, the safety switch 30 is connected between the connector pins 4a at the first end of the LED lamp assembly 1 and the first rectifier 11a arranged for supplying electrical power from connector pins 4a to the LEDs 12a. The LED lamp assembly 1 has only one safety switch arranged at only one end, so that connector pins 4b at the second end of the LED lamp assembly 1 are electrically coupled to an input of the second rectifier circuit 11b without an intervening switch. This avoids more complex configurations with two or more safety switches which are more expensive to produce.

When safety switch 30 is closed, electrical current can flow from the connector pins 4a at the first end of the LED lamp assembly 1 via the rectifiers 11a, 11b which supply of electrical power to the LEDs 12a to the connector pins 4b at the second end of the LED lamp assembly 1. This enables electrical current to flow from one end to the other end of the LED lamp assembly 1, i.e. between connector pins 4a, 4b at each end of the LED lamp assembly 1. Note that this is necessary if the LED lamp assembly 1 is operated in a lamp fixture 5 which supplies electrical power to both ends of the LED lamp assembly so that the electrical power flows between the connector pins at the two ends of the LED lamp assembly.

When safety switch 30 is open, the electrical connection between the connector pins 4a and rectifier 11a is broken. This prevents electrical current from flowing from one end to the other end of the LED lamp assembly 1 via the circuit for supplying power to the LEDs 12a, i.e. via rectifiers 11a and 11b. When safety switch 30 is open, the only path for flow of electricity from one end to the other end of the LED lamp assembly is via the safety switch control circuit 32. However, due to the high impedance of the safety switch control circuit 32, any current flow via this path is minimal so that it does not pose a risk of electrical shock, as explained further below.

Note that the LED lamp assembly 1 can still be operated with safety switch 30 open, when installed in a lamp fixture 5 which supplies electrical power between the two connector pins 4b at the second end of the LED lamp assembly 1 or when a filament simulation circuit is used at the first end of the LED lamp assembly to conduct power to the connector pins 4b at the second end of the LED lamp assembly. However, also in this type of lamp fixture, this does not pose a risk of electrical shock since the open safety switch 30 will prevent electrical current flow to the connector pins 4a at the first end of the LED lamp assembly during installation in the lamp fixture.

The safety switch 30 is preferably a normally open switch, i.e. it assumes the open position when the safety switch 30 is not energized. This prevents electrical current from flowing from one end to the other end of the LED lamp assembly 1 in the absence of any power applied to the LED lamp assembly, thus assuming the safe position.

The safety switch 30 preferably comprises an electro-mechanical relay having two or more switch contacts. For example, if using a relay with two switch contacts, each switch contact can be used as one of the safety switch elements 30a, 30b. For a relay with four switch contacts, two switch contacts can be connected in series to form each one of the safety switch elements 30a, 30b, thus providing redundancy for each switch element to protect against failure of any one of the switch contacts. The safety switch 30 may alternatively comprise two or more semiconductor switch elements such as one or more transistors or MOSFETs or the like to function as the safety switch elements 30a, 30b.

It is preferred to provide redundancy for the safety switch 30, so that failure of the switch 30 or the switch elements 30a, 30b does not result in permitting electrical current to flow between the two ends of the LED lamp assembly during installation, e.g. when the safety switch 30 should be in the open position. In the embodiment of Fig. 3, a filter circuit 14 is provided to address this issue. In this embodiment, the filter circuit 14 includes two filter elements 14a, 14b, and each one of the safety switch elements 30a, 30b is connected in series with a corresponding one of the filter elements 14a, 14b. In this way, one of the connector pins 4a is electrically coupled via a first safety switch element 30a in series with a first filter element 14a to a first input of the first rectifier circuit 11a, and the other connector pin 4a is electrically coupled via the other safety switch element 30b in series with a second filter element 14b to a second input of the first rectifier circuit 11a. Note that Fig. 3 shows the safety switch 30 between the connector pins 4a and the filter 14, and the filter 14 between the safety switch 30 and the rectifier 11a, but the order in which the safety switch 30 and filter 14 (comprising their respective switch elements 30a, 30b and filter elements 14a, 14b) can be changed, for example so that they exchange places.

The filter circuit 14 is preferably a high pass filter, e.g. each filter element 14a, 14b forming a high pass filter to permit electric current above a certain frequency to pass through the filter, while electric current below a predetermined cut-off frequency does not pass through the filter or is substantially attenuated to below a certain value. This arrangement can provide increased isolation between the two ends of the LED lamp assembly when being installed in a lamp fixture having a magnetic ballast or no ballast, as explained further below. The filter circuit 14 may be constructed using passive and/or active components to implement the desired frequency response using techniques known to the skilled person.

The safety switch control circuit 32 is arranged to close the safety switch 30 (and thus close the safety switch elements 30a, 30b so that the safety switch can conduct an electrical current) when the safety switch control circuit 32 detects electrical power at the first end of the LED lamp assembly (e.g. at the connector pins 4a at the first end or a circuit element electrically coupled to those connector pins) and also at the second end of the LED lamp assembly (e.g. at the connector pins 4b at the second end or a circuit element electrically coupled to those connector pins), i.e. at both ends of the LED lamp assembly.

The safety switch control circuit is configured to close the safety switch only when the safety switch control circuit detects electrical power at the both ends of the LED lamp assembly, and may be configured to close the safety switch only when the detected electrical power has a frequency above a predetermined threshold. The predetermined threshold may be set at a frequency level (e.g. 10kHz) to discriminate between electrical power received from a magnetic ballast or directly from a mains power supply (i.e. where no ballast is used) typically at a frequency of 50 or 60Hz, and electrical power received from an electronic ballast, typically at a frequency of 20kHz or higher.

The predetermined cut-off frequency of the filter circuit 14 may be set at a similar level (e.g. 10kHz) to also discriminate between electrical power received from a magnetic ballast or directly from a mains power supply (i.e. where no ballast is used) typically at a frequency of 50 or 60Hz, and electrical power received from an electronic ballast, typically at a frequency of 20kHz or higher. At frequencies below the cut-off frequency, such as 50 or 60 Hz, the filter circuit 14 (i.e. each of the filter elements 14a, 14b) will prevent the flow of electrical current through the filter circuit or substantially attenuate any current to a level so slow that it does not present a danger of electrical shock.

In this way, the safety switch control circuit 32 and filter circuit 14 can discriminate between the type of lamp fixture 5 into which the LED lamp assembly 1 is being installed. When installed in a lamp fixture 5 fitted with a magnetic ballast or without a ballast (so that the connectors pins 4a, 4b receive electrical power at a low frequency, such as 50 or 60Hz), the filter circuit 14 is arranged to prevent the flow of electrical current which could result in an electric shock, and the safety switch control circuit 32 may also be arranged to not close the safety switch 30, which remains in the open position to also prevent such flow of electrical current. This prevents electrical current flowing from one end to the other end of the LED lamp assembly 1 via the circuit for supplying power to the LEDs 12a (e.g. via the rectifier circuits 11a, 11b and the LEDs 12a), thus addressing the problem of potential electric shock from exposed connector pins during installation of the LED lamp assembly 1 into a lamp fixture 5. This is the only low-impedance path for flow of electrical current which can result in an electric shock. The other possible path for flow of electrical current from end-to-end of the LED lamp assembly 1 is via the safety switch control circuit 32, but any current flow via this path is minimal due to the high impedance of this path, so that it does not pose a risk of electrical shock.

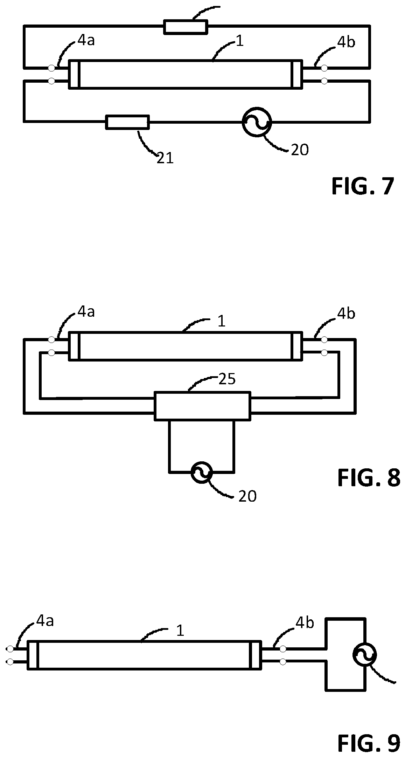

The LED lamp assembly 1 may be adapted to enable the LEDs 12a to be powered via the connector pins 4b arranged at the second end of the LED lamp assembly 1 without requiring power from the connector pins 4a arranged at the first end of the LED lamp assembly 1. This may be useful when the LED lamp assembly 1 is installed in a lamp fixture 5 fitted with a magnetic ballast 21 or no ballast. In this embodiment, the second rectifier circuit 11b is preferably implemented as a full-wave rectifier, to enable efficient supply of electrical power to the LEDs 12a from the connectors 4b arranged at the second end of the LED lamp assembly 1. In this way, the LED lamp assembly 1 can be operated when installed in this type of lamp fixture 5 as explained further in the description of FIGs. 7 and 9. Note that the first rectifier circuit 11a may be implemented as a full-wave or half-wave rectifier, as the first rectifier circuit 11a supplies electrical power to LEDs 12a when the LED lamp assembly 1 receives electrical power from the connector pins 4a, 4b arranged at both ends of the LED lamp assembly 1.

When installed in a lamp fixture 5 fitted with an electronic ballast (so that the connectors pins 4a, 4b receive electrical power at a high frequency, such as 20kHz), the safety switch control circuit 32 is arranged to close the safety switch 30 when it detects the electric power at both ends of the LED lamp assembly 1. In this type of lamp fixture 5, the electrical power is applied between the two ends of a lamp, i.e. between connector pins 4a at the first end and connector pins 4b at the second end. During installation of the LED lamp assembly 1, when only one end of the lamp has been installed in the lamp fixture and the other end is not yet installed, the safety switch control circuit 32 does not detect the electrical power at both ends of the LED lamp assembly and does not close the safety switch 30. This prevents electrical current flowing from one end to the other end of the LED lamp assembly 1 via the circuit for supplying power to the LEDs 12a, thus addressing the problem of potential electric shock from exposed connector pins during installation of the LED lamp assembly 1 into a lamp fixture 5 fitted with an electronic ballast. Once both ends of the LED lamp assembly 1 have been installed in the lamp fixture 5, the safety switch control circuit 32 will detect the electrical power applied to the connector pins 4a, 4b at both ends of the LED lamp assembly 1 and will close safety switch 30 to enable operation of the lamp, as explained further in the description of FIG. 8.

The safety switch control circuit 32 may be configured to provide a predetermined delay between detecting electrical power at the connector pins 4a, 4b arranged at the first and second ends of the LED lamp assembly 1 and closing the safety switch 30. This delay provides several benefits. The delay simulates the operation of a fluorescent tube, which usually requires a short delay after receiving electrical power and lighting the tube. Some electronic ballasts are designed to detect this delay, and perform a safety shutdown if used with a lamp which draws an operating current immediately. The short delay period (e.g. a delay in the range of 1 to 100ms) implemented in the safety switch control circuit 32 simulates a fluorescent tube and avoids this type of safety shutdown. In addition, the delay stabilizes the operation of the safety switch control circuit 32 and helps to prevent erratic switching of the safety switch 30 caused by variations in the output waveform of some types of electronic ballast.

The LED lamp assembly 1 with safety switch 30 is preferably designed to meet one or more of the requirements specified in applicable safety regulations, such as IEC standard 62776:2014 entitled "double-capped LED lamps designed to retrofit linear fluorescent lamps - safety specifications". The LED lamp assembly 1 is preferably able to withstand a voltage of at least 1500V (preferably at least 2500V, for example in case the safety switch 30 is implemented using one or more semiconductor switch elements) applied between both ends of the LED lamp assembly when the safety switch 30 is open, i.e. 1500V between connector pins 4a arranged at the first end of the LED lamp assembly 1 and connector pins 4b arranged at the second end of the LED lamp assembly 1, without flashover or breakdown. The LED lamp assembly 1 preferably conducts an electrical current equal to or less than 0.7mA peak, i.e. between connector pins 4a arranged at the first end of the LED lamp assembly 1 and connector pins 4b arranged at the second end of the LED lamp assembly 1, when a voltage of 500V is applied between both ends of the LED lamp assembly and the safety switch 30 is open, e.g. at a frequency of 50 or 60 Hz as specified in IEC standard 62776:2014.

FIG. 4 shows a simplified block diagram showing further details of one embodiment of an LED lamp assembly 1. In this embodiment, the safety switch control circuit 32 is powered from and receives inputs from both ends of the LED lamp assembly 1. The safety switch control circuit 32 has a first input electrically coupled to the connector pins 4a (via the filament simulation circuit 13a in this embodiment) at the first end of the LED lamp assembly 1, the electrical coupling being made to a point on the connector pin side of the safety switch 30 so that the safety switch control circuit 32 receives electrical power from the connector pins 4a even when the safety switch 30 is open. The safety switch control circuit 32 has a second input electrically coupled to one of the connector pins 4b (via the filament simulation circuit 13b in this embodiment) at the second end of the LED lamp assembly 1. This arrangement enables the safety switch control circuit 32 to receive electrical power from the connector pins 4a, 4b at either or both ends of LED lamp assembly 1 regardless of the state of safety switch 30 , i.e. open or closed. In this way, the safety switch control circuit 32 is energized and can control the safety switch 30 also during installation of the LED lamp assembly 1 into a lamp fixture 5 when the connector pins 4a, 4b at either end of LED lamp assembly 1 make a connection with the corresponding connectors in the lamp fixture and receive electrical power from the lamp fixture.

The safety switch control circuit 32 preferably has a high input impedance, e.g. 10kOhm, preferably 100kOhm or more (e.g. measured at a frequency of 10KHz) between its two inputs, so that when the safety switch 30 is open the impedance between the two ends of the LED lamp assembly is also high. This limits the amount of electrical current flowing through the safety switch control circuit 32 and the amount of power wasted in the control circuit, and also reduces the electrical current flowing through the LED lamp assembly 1 to a low value when the safety switch 30 is open (preferably to less than 0.7mA peak when a voltage of 500V is applied between both ends of the LED lamp assembly). This low leakage current enables the LED lamp assembly 1 to meet applicable safety regulations, and provides greater compatibility with a range of different makes and types of electronic ballasts. Some designs of electronic ballast will perform a safety shutdown if the leakage current is too high, and an input impedance of 250kOhm or more is preferred to enable wide compatibility with electronic ballasts on the market.

In this embodiment, the safety switch control circuit 32 comprises a first high pass filter 41 electrically coupled one of the connector pins 4a at a first end of the LED lamp assembly 1, and a second high pass filter 42 electrically coupled one of the connector pins 4b arranged at a second end of the LED lamp assembly 1. The safety switch control circuit 32 also comprises a logic circuit 45 having a first input electrically coupled to the first high pass filter 41 and a second input electrically coupled to the second high pass filter 42, and is adapted to determine an output for control of the safety switch 30 on the basis of the first input and/or the second input.

The safety switch control circuit 32 may also include rectifier circuits 43 and 44, where the first input of the logic circuit 45 is electrically coupled to the first high pass filter 41 via a third rectifier circuit 43, and the second input of the logic circuit 45 is electrically coupled to the second high pass filter 42 via a fourth circuit rectifier circuit 44.

The optional high pass filters 41, 42 operate to pass a high frequency signal, e.g. in the form of a high frequency electrical voltage or current, from the connectors pins 4a, 4b, while substantially blocking or reducing a low frequency signal. For example, the high pass filters 41, 42 may be configured to pass electrical current from the connectors pins 4a, 4b when the pins receive electrical power at a frequency above a predetermined threshold, e.g. above 10kHz, such as may be expected when the LED lamp assembly 1 is installed in a lamp fixture 5 fitted with an electronic ballast operating at 20kHz, and the high pass filters 41, 42 may be configured to substantially block or reduce electrical current from the connectors pins 4a, 4b when the pins receive electrical power at a frequency below a predetermined threshold, e.g. below 10kHz, such as may be expected when the LED lamp assembly 1 is installed in a lamp fixture 5 fitted with a magnetic ballast or with no ballast, operating at 50 or 60Hz. In this way, the safety switch control circuit 32 can discriminate between the type of lamp fixture into which the LED lamp assembly 1 is being installed, i.e. a lamp fixture 5 fitted with a magnetic ballast or without a ballast (so that the connectors pins 4a, 4b receive electrical power at a low frequency, such as 50 or 60Hz) or a lamp fixture fitted with an electronic ballast (so that the connectors pins 4a, 4b receive electrical power at a high frequency, such as 20kHz).

The rectifier circuits 43 and 44, when included in the circuit, rectify the output from the high pass filters 41 and 42, providing a DC electrical current for providing electrical power and an input signal to the logic circuit 45.

The logic circuit 45 receives an electrical signal via the high pass filters 41, 42, and implements a delay of a predetermined time period between detecting electrical power at a frequency above a predetermined threshold at the connector pins 4a, 4b arranged at the first or second ends of the LED lamp assembly 1 and closing the safety switch 30, as described above. This delay may be realized using a delay timer implemented in the logic circuit 45. The delay simulates the delayed start of a fluorescent tube to improve compatibility with electronic ballasts which have a safety shutdown function, and to stabilize operation of the safety switch control circuit 32 to prevent erratic switching of the safety switch 30 caused by variations in the output waveform of some electronic ballasts.

The logic circuit 45 may be implemented using discrete logic, such as an op-amp comparator circuit, or using a programmable microcontroller, FPGA, or other type of analog, digital, or programmable circuit.

FIG. 5 shows a simplified circuit diagram of one embodiment of the safety switch control circuit 32.

In this embodiment, designed for use with all types of ballasts or no ballast, a first filament simulation circuit 13a comprises resistance R1 (comprising one or more resistive elements) connected between two connector pins 4a at the first end of the LED lamp assembly 1, and a second filament simulation circuit 13b which preferably comprises a variable resistance R2 and capacitance C3 connected in parallel between two connector pins 4b at the second end of the LED lamp assembly 1. The variable resistance R2 has a resistance which varies depending on the voltage across the resistance, providing a higher resistance when the voltage is high and a lower resistance when the voltage is low. For example, the resistance R2 may comprise a positive temperature coefficient (PTC) resistor.

The safety switch 30 comprises an electromagnetic relay having a coil 30c and two switch contacts (safety switch elements) 30a and 30b. The high-pass filter circuit 14 comprises capacitances C4 and C5 serving as high-pass filter elements 14a and 14b respectively. The rectifiers 11a and 11b are both configured as full-wave rectifiers.

Each switch contact 30a, 30b is connected in series with a respective filter element C4, C5. Each connection pin 4a is connected via a corresponding switch contact and filter element to the rectifier circuit 11a, so that the safety switch 30 operates to connect or disconnect the connector pins 4a at the first end of the LED lamp assembly 1 to the rectifier circuit 11a.

In this embodiment the high pass filters 41 and 42 comprise capacitors C1 and C2 respectively, and the third and fourth rectifier circuits 43 and 44 comprise diodes D1, D2 and D3, D4 respectively. Capacitor C1 is connected between resistors R1 and R2 on one side and between diodes D1 and D2 on the other side, and capacitor C2 is connected between connector pin 4b on one side and between diodes D3 and D4 on the other side.

A Zener diode Z1 is connected across the outputs of the third and fourth rectifier circuits 43 and 44 to stabilize the rectified voltage. Logic circuit 45 is connected across the rectified voltage outputs of the third and fourth rectifier circuits 43, 44. Logic circuit 45 drives a transistor T1, which energizes coil 30a of the safety switch 30 when the transistor T1 is turned on, and de-energizes coil 30a when the transistor T1 is turned off. Switch contacts 30b and 30c of safety switch 30 are closed when coil 30a is energized, and open when coil 30a is de-energized.

In this embodiment, the filament simulation circuits 13a and 13b are different. The first filament simulation circuit 13a (comprising resistive element R1 in the example shown in FIG. 5) provides a low resistive impedance between the two connector pins 4a at the first end of the LED lamp assembly 1 regardless of whether the electrical power applied to the first connector pins 4a has a low or high frequency. The second filament simulation circuit 13b (comprising variable resistive element R2 and capacitive element C3 connected in parallel in the example shown in FIG. 5) provides a variable impedance between the two connector pins 4b at the second end of the LED lamp assembly 1, the impedance varying in dependence on the frequency of the electrical power applied to the two connector pins 4b at the second end of the LED lamp assembly 1. The second filament simulation circuit 13b provides a low impedance when the electrical power applied to connector pins 4b has a high frequency (e.g. when the electrical power is supplied from an electronic ballast operating at 20kHz), and provides a high impedance when the electrical power applied to connector pins 4b has a low frequency (e.g. when the electrical power is supplied from a magnetic ballast operating at 50 or 60Hz).

FIG. 6 shows a simplified block diagram of one embodiment of the LED lamp assembly 1 adapted for operation in a variety of types of lamp fixtures 5, fitted with a magnetic ballast, and electronic ballast, or without a ballast.

The LED lamp assembly 1 in this embodiment comprises an LED circuit 12 having a first power supply circuit 50 for supplying power to the LEDs 12a when the LED lamp assembly 1 is supplied with electrical power having a frequency above a predetermined threshold, e.g. power supplied from an electronic ballast 25 at a frequency of 20kHz or higher. The LED circuit 12 in this embodiment also comprises a second power supply circuit 51 for supplying power to the LEDs 12a when the LED lamp assembly 1 is supplied with electrical power having a frequency below a predetermined threshold, e.g. power supplied from a magnetic ballast 21 or not via a ballast at a frequency of 50 or 60Hz.

The LED lamp assembly 1 may be adapted to disable or disconnect the switched-mode power supply 57 from supplying electrical power to the LEDs 12a when the electrical power supplied to the LED lamp assembly 1 has a frequency above a predetermined threshold. For example, a separate frequency detector circuit (not shown in FIG. 6) may be included in the LED lamp assembly for this, which controls a first switch 52 to connect/enable or disconnect/disable the first power supply circuit 50 for supplying electrical power to the LEDs 12a, and a second switch 55 to connect/enable or disconnect/disable the second power supply circuit 51, including the switched-mode power supply 57, for supplying electrical power to the LEDs 12a.

The first power supply circuit 50 may comprise a variable impedance 53, which is configured to have a relatively higher impedance when the LED lamp assembly 1 is supplied with electrical power from a constant power electronic ballast, and a relatively lower impedance when supplied from a constant current electronic ballast. The variable impedance 53 may be configured to switch to the higher impedance mode when the electrical current or voltage supplied to the LED lamp assembly 1 is detected to be above a predetermined threshold (e.g. a current or voltage detector circuit may be included in the LED lamp assembly for this), indicating that the electrical power is supplied from a constant power electronic ballast. Further details of the LED lamp assembly 1 comprising first and second power supply circuits 50, 51 can be found in US 10,342,079 which is incorporated herein by reference in its entirety.

The LED lamp assembly 1 is preferably adapted for operation in a lamp fixture 5 fitted with a magnetic ballast or an electronic ballast or not fitted with any ballast. To better understand the operation of the LED lamp assembly 1, FIGs. 7-9 illustrate various modes of use of the LED lamp assembly 1 in different types of lamp fixtures.

FIG. 7 shows a simplified circuit diagram of LED lamp assembly 1 installed in a lamp fixture that includes a magnetic (i.e. inductive) ballast 21. AC power 20 is supplied via magnetic ballast 21 between a connector pin 4a at one end and a connector pin 4b at the other end of the LED lamp assembly 1. AC power 20 is typically mains power, e.g. 110/120Vac or 230/240Vac at a frequency of 50 or 60Hz. A lamp fixture fitted with a magnetic ballast and designed for operating fluorescent tubes will typically include a starter unit 22, connected to connector pins 4a, 4b at each end of the LED lamp, for supplying a starting voltage to ignite a fluorescent tube. When an LED lamp is installed in a lamp fixture of this design, a replacement for the starter unit 22 (e.g. a fuse) providing a low impedance across its terminals is typically fitted in the lamp fixture, to replace any existing starter unit. This provides a short circuit and completes an electrical circuit to bring the AC power from one end of the LED lamp assembly to the other end, e.g. from connector pins 4a to connector pins 4b.

In this example, the first end of the LED lamp assembly 1 (on the left side of FIG. 7) includes the safety switch 30. The filament simulation circuit 13a at the first end (see FIG. 3) has a low impedance, for example comprising a low value resistance between the connector pins 4a at the first end of e.g. 10-20 Ohms . The filament simulation circuit 13b at the second end (see FIG. 3) has a low impedance at high frequencies (e.g. frequencies of 10kHz and above) and a high impedance at low frequencies (e.g. frequencies below 1kHz, such as 50 or 60Hz). The filament simulation circuit 13 at the second end may comprise, for example, resistive and capacitive elements providing a resistance between the connector pins 4b at the second end of e.g. several MOhm at 50 or 60Hz, and 10-20 Ohms at 20kHz.

In this configuration, electrical power is supplied from AC power 20 via the magnetic ballast 21, the connector pins 4a and filament simulation circuit 13a at the first (left) end of the LED lamp assembly 1, and the modified (shorted) starter unit 22, to the connector pins 4b at the second (right) end of the LED lamp assembly 1. As the frequency of the electrical power is low, e.g. 50 or 60Hz and below a predetermined cut-off frequency of the filter circuit 14 (not shown), electrical current does not pass through the filter circuit or is substantially attenuated by the filter circuit. The safety switch control circuit 32 detects the electrical power applied to the installed connector pins 4a, 4b at both ends. The frequency of the electrical power is also below the predetermined threshold (if implemented) of the safety switch control circuit 32 (not shown) so that it does not close the safety switch 30, which remains open, disconnecting the connector pins 4a from a remaining part of the circuitry of the LED lamp assembly 1.

During installation of the LED lamp assembly 1, one end of the LED lamp assembly 1 is installed first, and the connector pins 4a or 4b at the end which is installed become connected with the corresponding connectors in the lamp fixture and receive electrical power. However, the safety switch 30 remains open, so that the safety switch 30 and filter 14 prevent electrical current from flowing through the LED lamp assembly 1, so that any accidental touching of the exposed connector pins 4a or 4b at the uninstalled end of the LED lamp assembly 1 does not result in an electrical shock.

Once fully installed, the LED lamp assembly 1 receives electrical power via the connector pins 4b at the second end of the LED lamp assembly 1, and the LEDs 12a are powered via the connector pins 4b enabling normal operation of the LED lamp.

FIG. 8 shows a simplified circuit diagram of LED lamp assembly 1 installed in a lamp fixture that includes an electronic ballast 25. AC power 20 is supplied to the electronic ballast 25, which outputs electrical power at a high frequency, typically at 20kHz or higher, to both ends of the LED lamp assembly. The electronic ballast 25 applies electrical power across the LED lamp assembly 1, between the connector pins 4a at the first end and the connector pins 4b at the second end of the LED lamp assembly 1, and monitors current flow between the two connection pins at each end of the LED lamp assembly 1 via the filament simulation circuits 13a, 13b.

During installation of the LED lamp assembly 1, one end of the LED lamp assembly 1 is installed first, and the connector pins 4a or 4b at the end which is installed become connected with the corresponding connectors in the lamp fixture and receive electrical power. However, safety switch control circuit 32 does not detect electrical power at both ends of the LED lamp assembly 1, and as a consequence the safety switch 30 remains open. This prevents electrical current from flowing through the LED lamp assembly 1, so that any accidental touching of the exposed connector pins 4a or 4b at the uninstalled end of the LED lamp assembly 1 does not result in an electrical shock.

Once fully installed in the lamp fixture 5, the safety switch control circuit 32 detects the electrical power applied between the connector pins 4a, 4b at both ends. As the frequency of the electrical power is high, e.g. 20kHz and above the predetermined cut-off frequency of the filter circuit 14 and also above the predetermined threshold (when implemented) so that the safety switch control circuit 32 closes the safety switch 30 and the connector pins 4a at the first end of the LED lamp assembly 1 are electrically coupled to the rectifier 11a, completing a circuit between both ends of the LED lamp assembly 1 via the rectifiers 11a, 11b and LEDs 12a, and thus enabling electrical current to flow through the circuit supplying electrical power to the LEDs 12a.

The voltage across the connector pins 4a at the first end of the LED lamp assembly 1 is low and a small current flows via the filament simulation circuit 13a (e.g. resistance R1 in the FIG. 5 embodiment). The voltage across the connector pins 4b at the second end of the LED lamp assembly 1 is also low and a small current flows via the filament simulation circuit 13b (e.g. variable resistance R2 and capacitance C3 in the FIG. 5 embodiment) which present a low impedance. This small current flow across the filament simulation circuits at each end avoids the safety circuit typically included in the electronic ballast from switching off the ballast output. Since conventional fluorescent lamps include a low resistance heating filament at each end, such safety circuits are designed to detect a small current flow through these filaments to confirm the presence of the fluorescent tube in the lamp fixture,

The LED lamp assembly 1 may be designed especially for use with electronic ballasts, having a filament simulation circuit at each end, each circuit comprising a fixed value resistance and capacitance connected in parallel between the connector pins 4a at the first end and between the connector pins 4b at the second end of the LED lamp assembly 1. These filament simulation circuits provide a low impedance path between the two connector pins at each end, avoiding a safety shutdown by an electronic ballast as described above.

FIG. 9 shows a simplified circuit diagram of LED assembly lamp 1 installed in a lamp fixture designed without a ballast. In this example, AC power 20 is supplied to the connector pins 4a or 4b at only one end of the LED lamp assembly 1. AC power 20 is typically mains power, e.g. 110/120Vac or 230/240Vac at a frequency of 50 or 60Hz.

As described above in relation to FIGs. 7 and 8, during installation of the LED lamp assembly 1 the safety switch 30 remains open, so that the filter 14 and safety switch 30 prevent electrical current from flowing through the LED lamp assembly 1, so that any accidental touching of the exposed connector pins at the uninstalled end of the LED lamp assembly 1 does not result in an electrical shock. Once fully installed in the lamp fixture 5, with the connector pins 4b at the second end of the LED lamp assembly receiving electrical power from the lamp fixture 5, the LEDs 12a are powered via the connector pins 4b enabling normal operation of the LED lamp.

In this disclosure the terms "close" and "open" encompass on/off switching such as produced by an electromechanical relay, or turning on and turning off of a transistor or MOSFET or the like, i.e. variation between an on or connected state with relatively low impedance (i.e. closed or on), to an off or disconnected state with relatively high impedance (i.e. open or off).

It will be appreciated by the skilled person that the embodiments described herein all relate to an LED lamp assembly having a safety switch, and features described in relation to one embodiment may be used with or combined with features of the other embodiments. While the principles of the invention have been set out above in connection with specific embodiments, it is to be understood that this description is merely made by way of example and not as a limitation of the scope of protection, which is determined by the appended claims.

## Claims

1. An LED lamp assembly (1) comprising a safety switch (30), the LED lamp assembly (1) comprising:
a plurality of connector pins (4a, 4b) arranged at first and second ends of the LED lamp assembly (1), the connector pins (4a, 4b) being adapted for electrical connection to a lamp fixture (5);
a plurality of rectifier circuits (11a, 11b) coupled to receive electrical power from the connector pins (4a, 4b);
one or more LEDs (12a) coupled to receive electrical power from the rectifier circuits (11a, 11b);
a safety switch control circuit (32) operatively coupled to the safety switch (30); and
a filter circuit (14) comprising a first filter element (14a) and a second filter element (14b);
wherein the safety switch (30) comprises a first switch element (30a) coupled in series with the first filter element (14a) and a second switch element (30b) coupled in series with the second filter element (14b), the safety switch (30) coupled for supplying electrical power to a first one of the rectifier circuits (11a); and
wherein the safety switch control circuit (32) is arranged to close the safety switch (30) when the safety switch control circuit (32) detects electrical power at one or more of the connector pins (4a) arranged at the first end of the LED lamp assembly (1) and at one or more of the connector pins (4b) arranged at the second end of the LED lamp assembly (1).

2. The LED lamp assembly according to claim 1, wherein, when the safety switch (30) is open, electrical current is prevented from flowing from the connector pins (4a) arranged at the first end of the LED lamp assembly (1) to the connector pins (4b) arranged at the second end of the LED lamp assembly (1) via the rectifier circuits (11a, 11b).

3. The LED lamp assembly according to claim 1 or claim 2, wherein the safety switch control circuit (32) is arranged to close the safety switch (30) when the detected electrical power has a frequency above a predetermined threshold.

4. The LED lamp assembly according to any one of the preceding claims, wherein the safety switch control circuit (32) is configured to provide a predetermined delay between detecting the electrical power at the connector pins (4a, 4b) and closing the safety switch (30).

5. The LED lamp assembly according to any one of the preceding claims, wherein the filter circuit (14) comprises a high pass filter.

6. The LED lamp assembly according to any one of the preceding claims, wherein the safety switch control circuit (32) has a first input electrically coupled to the connector pins 4a at the first end of the LED lamp assembly 1 and a second input electrically coupled to the connector pins 4b at the second end of the LED lamp assembly 1, to receive electrical power as an input signal from both the first and second ends of the LED lamp assembly 1.

7. The safety switch control circuit (32) may be constructed to have an impedance between the first and second inputs of 10kOhm or more at a frequency of 10kHz.

8. The LED lamp assembly according to any one of the preceding claims, wherein the LED lamp assembly (1) conducts an electrical current equal to less than 0.7mA between the connector pins (4a) arranged at the first end of the LED lamp assembly (1) and the connector pins (4b) arranged at the second end of the LED lamp assembly (1), when a voltage of 500V is applied between the first and second ends of the LED lamp assembly and the safety switch (30) is open.

9. The LED lamp assembly according to any one of the preceding claims, wherein the LED lamp assembly (1) is able to withstand at least 1500V across the connector pins (4a) arranged at the first end of the LED lamp assembly (1) and the connector pins (4b) arranged at the second end of the LED lamp assembly (1) when the safety switch (30) is open.

10. The LED lamp assembly according to any one of the preceding claims, wherein the safety switch control circuit (32) comprises:
a first high pass filter (41) electrically coupled one of the connector pins (4a) arranged at a first end of the LED lamp assembly (1), and a second high pass filter (42) electrically coupled one of the connector pins (4b) arranged at a second end of the LED lamp assembly (1); and
a logic circuit (45) having a first input electrically coupled to the first high pass filter (41) and a second input electrically coupled to the second high pass filter (42), and adapted to determine an output for control of the safety switch (30) on the basis of the first input and/or the second input.

11. The LED lamp assembly according to any one of the preceding claims, wherein the LED lamp assembly (1) is adapted to provide electrical power to the LEDs (12a) via the connector pins (4b) arranged at the second end of the LED lamp assembly (1).
[In this way, the LED lamp assembly can be operated in a lamp fixture (5) fitted with a magnetic ballast (21) or no ballast. The LED lamp assembly may be adapted for operation in a lamp fixture (5) fitted with a magnetic ballast (21) or an electronic ballast (25) or no ballast.]

12. The LED lamp assembly according to any one of the preceding claims, further comprising a switched-mode power supply (57), wherein the LED lamp assembly (1) is adapted to provide electrical power to the LEDs (12a) via the switched-mode power supply (57) when the safety switch control circuit (32) detects electrical power having a frequency at or below the predetermined threshold at the connector pins (4a) arranged at the first end of the LED lamp assembly (1) or at the connector pins (4b) arranged at the second end of the LED lamp assembly (1).

13. The LED lamp assembly according to claim 12, wherein the LED lamp assembly (1) is adapted to disable or disconnect the switched-mode power supply (57) from supplying electrical power to the LEDs (12a) when the safety switch control circuit (32) detects electrical power having a frequency above the predetermined threshold at the connector pins (4a) arranged at the first end of the LED lamp assembly (1) or at the connector pins (4b) arranged at the second end of the LED lamp assembly (1).

14. The LED lamp assembly according to any one of the preceding claims, comprising a first filament simulation circuit (13a) having a first impedance and electrically coupled to the connector pins (4a) at the first end of the LED lamp assembly (1), and a second filament simulation circuit (13b) having a second impedance and electrically coupled to the connector pins (4b) at the second end of the LED lamp assembly (1), wherein the second impedance is higher than the first impedance when electrical power having a frequency lower than 1 kHz is applied to the connector pins (4a, 4b).

15. The LED lamp assembly according to any one of the preceding claims, comprising a first rectifier circuit (11a) forming a half-wave rectifier and electrically coupled via the safety switch (30) and filter circuit (14) to the connector pins (4a) at the first end of the LED lamp assembly, and a second rectifier circuit (11b) forming a full-wave rectifier and electrically coupled to the connector pins (4b) at the second end of the LED lamp assembly.
